# EUROPEAN PATENT APPLICATION

(11) **EP 3 916 524 A1**
(43) Date of publication of application: **01.12.2021**
(21) Application number: 20209347.2
(22) Date of filing: 23.11.2020
(51) Int. Cl.: G06F 3/01, G06K 9/00, G06K 9/32

(54) **METHOD AND APPARATUS FOR GENERATING AND PRESENTING A MESSAGE TO CUSTOMER**

(30) Priority: 21.11.2019 FI 20197148
(71) Applicant: doop Osakeyhtiö, 20100 Turku (FI)
(72) Inventor: Lehtonen, Antero, 20210 Turku (FI)

(57) **Abstract**

The invention relates to a method and apparatus for creating and presenting a client message (13, 14, 18, 28, 29). The method comprises at least the following steps:
- examining and evaluating at least one client attribute (25, 26);
- determining an object (3, 4, 5, 9, 13, 14, 18, 27, 29), i.e. an object in which the client is interested;
- keeping in electronic memory message components that are valued according to with which object (3, 4, 5, 9, 13, 14, 18, 27, 29) they can be used and what kind of clients they are suitable for:
- selecting with the message selection module, based on client attributes and their objects of interest, the one or more message components which, in each situation, constitute the most appropriate client message;
- forming a client message (13, 14, 18, 28, 29) from the selected message components and presenting it to the client by a presentation device (9).

## Description

### TECHNICAL FIELD OF THE INVENTION

The invention relates to a method of and apparatus for creating and presenting a client message as set out in the preambles of the independent claims set out below. In particular, the invention relates to a new way of selecting a message suitable for each client for each situation by assembling it from suitable message components from among the ready-made options.

### TECHNICAL BACKGROUND

It is well known to select client messages, such as advertisements, according to client attributes. US 2016148247 A1 discloses a system that identifies one or more attributes of a client's face, such as mood, gender, age, and selects the advertisement shown to the client based on that attribute. US 2018033045 A1 discloses a method for generating and displaying targeted advertisements.

The known solutions do not produce individual messages suitable for each situation simply and efficiently enough.

### OBJECT OF THE INVENTION

The object of the present invention is to reduce or even eliminate the above-mentioned problems occurring in the prior art.

It is an object of the present invention to provide a solution which makes the selection of a client message more precisely suitable for each situation.

It is an object of the present invention to provide a message better suited to client demographics.

It is an object of the present invention to provide a message that is better suited to an emotional state of a client.

It is an object of the present invention to provide a means of getting an irritated client in a better mood.

It is an object of the present invention to provide measurable information on the effectiveness of a client message.

It is an object of the present invention to improve the functionality of a client terminal device, such as a client service terminal, a ticket machine or a queuing number machine, for different kind of clients.

It is an object of the present invention to improve and enhance the encounter between a client and a client service agent.

It is an object of the present invention to provide measurable information on the success of client encounters and problem solving at the client interface.

### SUMMARY OF THE INVENTION

Among other things, in order to achieve the above-mentioned objects, the method, apparatus and other objects of the invention are characterized by what is set forth in the appended independent claims.

The embodiments and advantages mentioned in this text apply, where applicable, to the method, apparatus, and other objects according to the invention, although it is not always mentioned separately.

A typical method according to the invention of creating and presenting a client message comprises at least the following steps:
- examining and evaluating at least one client attribute. The attribute that describes a client can be, for example, demographic information, such as the client's age or gender. The client attribute can be studied, for example, from an image taken of the client by means of pattern recognition or from the client's voice by means of an artificial intelligence application. If the client has been identified, the client attribute and its value can be selected, for example, on the basis of information stored in a client register or other database.
- determining an object, i.e. an object in which the client is interested. For example, something that the client is handling, such as touching or moving, can be chosen as an object of interest. The object can be determined, for example, on the basis of a change in a signal produced by an acceleration sensor connected to the object or on the basis of pattern recognition monitoring the object and/or the client. It is possible that there is only one potential object of interest, in which case it is selected as the object of interest to the client.
- keeping message components that are valued according to with which object they can be used and what kind of clients they are suitable for, in an electronic memory. Thus, message components comprise at least one message-specific attribute value related to an attribute of the client, and at least one message-specific object value describing the object related to the message;
- selecting with a message selection module, based on attributes of clients and objects of interest of clients, the one or more message components which, in each situation, constitute the most appropriate client message;
- creating a client message using the selected message components and presenting it to the client with a presentation device. The presentation device can be, for example, a computer monitor, a television, a projector and a display surface, a printout, a mobile device, the client's own mobile terminal.
Typically, the steps of the invention are performed at least substantially automatically by at least one computer, devices connected thereto, and software runnable on the computer.

The method according to the invention can be implemented, for example, with the apparatus for creating and presenting a client message according to the invention. The apparatus comprises at least one computer comprising an electronic memory and program code elements arranged runnable on it, and comprising functionally connected to the computer
- examining equipment and an evaluation module in order to examine and evaluate at least one attribute of a client;
- a monitoring module, arranged to identify an object in which the client is interested;
- an electronic memory and maintained in it message components, which comprise
   o at least one message-specific attribute value describing an attribute of the client, indicating to which kind of clients a message component is suitable for; and
   ∘ at least one message-specific object value, which indicates with which object the message component can be used;
- a message selection module, arranged to:
   ∘ select, based on the attributes of the client and the object of the client's interest, the one or more message components which, in each situation, constitute the most appropriate client message;
   ∘ create a client message to be presented, by using the selected message components;
- a presenting device arranged to present the selected client message to the client.

One way to describe the invention is say that there both a object value indicating a suitable object of interest for the message component and a attribute value indicating a suitable client for the message component are defined for each message component stored in the electronic memory. Based on the client's attributes and object of interest, one or more of the message components which, in each situation, constitute the most appropriate client message are selected to the client message. That is, first, the message component to be selected must match the object of the client's interest. And second, the message component to be selected must match the attributes of the client.

Some embodiments of the invention comprise one or more or all of the following:
- Producing a digital image of at least one client with an imaging device. The imaging device can be e.g. a camera or a video camera.
- Identifying parts of the image with a pattern recognition module and recognizing at least one client attribute from the parts of the image. An attribute that describes the client can be, for example, demographic information, such as the client's age or gender. An emotional analysis can be performed on the client, in which case the attribute describing the client can be his or her emotional state or level of satisfaction. Recognising these from images using digital pattern recognition is a technique known per se, and it is not particularly the subject of the present invention. Many different pattern recognition methods and applications are suitable for use with the present invention.
- Evaluating the at least one attribute mentioned with an evaluation module and giving it a client specific attribute value. The evaluation of the attributes to be recognized from the images is a technique known per se. Values can be, for example, verbal or numeric values. A numeric value can be assigned to any attribute to describe the degree of the attribute. For example, the numeric value may be between two values where the lowest value means a very low or non-existent attribute level and the highest a very high or highest possible attribute level. For example, the age of a client can be estimated with an accuracy of one, five or ten years. As a value for gender may given, for example, a man, a woman, something else, uncertain. As a verbal value for emotional state can be given, for example, satisfied, dissatisfied, surprised, enthusiastic, contemptuous, indifferent, tired, ambiguous. Satisfaction level can be given a verbal value of, for example, very satisfied, satisfied, ambiguous, dissatisfied, very dissatisfied. The satisfaction level can be given a numerical value, for example, between 0-100 or 0-1, where, for example, the lowest value 0 can mean very dissatisfied and the highest value 100 or 1 very satisfied.
- Keeping message components that comprise at least one message-specific attribute value and at least one message-specific object value relating to the object related to the message. The message-specific object value describes an attribute that describes the client. For example, in a message intended for children, the message-specific value related to client's age may be 7-12, in which case this message is intended for 7 to 12 year olds. The object related to a message may be any thing, product, or product group for which or to which one or more client messages are intended. Thus, the message components stored in the electronic memory are associated with a message-specific object value, i.e. information on which product or thing each message component is intended to be presented with. That is, for example, each product presented in a store may have one or more message components presenting its features. If the same message component is used for several different objects, this message component has several different object values.
- Comparing with message selection module the message-specific object values and client specific attribute values of those message components whose object value corresponds to the object in which the client is interested. In other words, if the client handles or examines item A, the message-specific attribute values to be compared are selected from the messages specifically for item A.
- This comparison can be made in many different ways. It may be possible to search for message-specific and client-specific attribute values that have exactly the same value. For example, for a person younger than a certain age, for example under five, one must find a message component that is suitable for his or her age. On the other hand, especially when comparing several different attributes, it may be that not all attribute values are matched exactly. In this case, the results of the comparison can be evaluated, for example by scoring each attribute value comparison between the message component and the client. Scoring can produce, for example, a percentage or a ratio. It can tell you how well the attribute value of a particular message component matches the attribute value of the corresponding attribute of the client.
- Selecting with a message selection module one or more message components. In one embodiment, a message component is selected from among the message components whose message-specific value related to the object corresponds to the object the being handled or examined by the client. In other words, if the client is handling or examining item A, the client message to be presented is selected from the messages intended for exactly item A. For example, if a client is evaluated as a child, a message component for children can be selected. If a client is judged dissatisfied or angry, a message component that is considered to be calming or to make one happier can be selected. The message component whose message component attribute value best matches the attribute value of the client's a corresponding attribute can be selected. That is, for example, if the client is considered to be 11 years old, a message component of the client message can be selected for him or her, the message-specific attribute value of which relating to the clients's age is as close to eleven as possible, for example 7-12. If there are several evaluated attributes, the selection of the message component can be made on the basis of the scores of several evaluated attributes, for example on the basis of the averages of the scores.
- Creating the client message to be presented using the selected message components. There are different ways to create a message. For example, the content of the message, such as the text and formatting of the text, and forming a message from them, for example, a greeting to be displayed on a display device.

The invention is implemented at least in part by at least one computer. It can be a stand-alone device or, for example, a server integrated in the monitoring devices or a display device or used over a network. The computer has an electronic memory and software stored in the memory and arranged to run therein, i.e. program code comprising program code elements arranged to perform at least some of the steps of the method of to the invention and at least some of the functions of parts of the apparatus of to the invention.

Electronic memory can mean any memory medium and/or data structure, such as a database, in which information according to the invention is maintained in electronic form and from which the information can be read for the purposes of the invention.

The invention uses the necessary data transmission means between the devices used in the invention, for example monitoring devices, a computer and a display device. Data transmission devices can be wired or wireless.

This text refers often to a client, which means anyone or any entity using the invention or subject to the invention, such as a person, user, group. The client may be, for example, any animal, human, other animal, or mammal other than human, for example a dog or cat, any other living being. When the client is non-human, the attribute that describes the client can be, for example, a species, a race.

One advantage of the invention is that it allows the client message, such as an advertisement or a user interface of a client terminal device, to be automatically and quickly tailored to both the client and the object.

One advantage of the invention is that it can be used in market communication to direct the message as suitable to a target audience, for example by selecting from ready-made advertising template alternatives a message suitable for each client demographics and/or suitable for emotional state of the client.

One advantage of the invention is that it is suitable for monitoring and improving the quality of many different client encounters.

In one embodiment, the message components are complete ready-made messages, such as an image, video, or application, such as a user interface. Then, it is not necessary to combine the message components to form a client message.

For example, a client message can be created using predefined message components such as the greeting "Hei" elsewhere in Finland and "Moro" in Tampere. It can be combined with features based on the client's estimated demographics. For example, depending on the client's estimated age, the font size of the greeting text, the volume of the audio track, the way of speaking, additional interesting information about an object product can be selected.

The client's object of interest may be a touchable thing, such as a product or device for sale, for presentation, or usable to the client. Examples of such an object are a garment, a piece of kitchenware, an electronic device, a queuing number machine, an elevator control panel, car or aircraft instrumentation and controls, a user interface, or a point on the user interface to be touched or handled. The object of the client's interest may be intended to be mainly or entirely observed, experienced, viewed, or listened to. Examples of such an object are client messages or other things presented on a display device or otherwise, such as a product, service, work of art, piece of music, image, video, or movie. Objects of client's interest can combine both touching, using, and hearing and seeing, such as computer games or controlling a vehicle.

In an embodiment at least one message component kept in the electronic memory comprises a component that affects the content of the client message formally or effectively. The message component can be, for example, sound volume, language used, difficulty level of the vocabulary used in the message, audio track used in the message, tone of voice or gender of the person speaking in the message, subtitles, information content about the object to be presented. With interchangeable message components, the same client message body can be adapted to different clients or objects.

In one embodiment, client messages are compiled all the time during client contact. Client messages can be assembled at the same time as client attributes are being identified.

In one embodiment of the invention, some or all of the client messages are created with an artificial intelligence or Al-based solution, whereby a message suitable for the a client's attribute, such as gender, age or emotional state, is automatically created when necessary. The message selection module may comprise Al-based software elements that select the message or message components suitable for the message body. Another advantage is that the Al-based solution, i.e. the neural network, can learn. For example, various client messages can be tested and their effects on, for example, client reactions and other measurable variables such as sales data can be monitored. In this way, the operation of the invention can be further optimized. In the future, instead of preset values, message components can be selected whose power can be validated according to the client's behavior.

In an embodiment of the invention at least one client attribute is recognized from the face of the client in an image. In an embodiment of the invention at least one attribute describing the client is selected from the following list: age, gender, emotional state, satisfaction level. Face and expression recognition is a known technique.

In an embodiment of the invention message components that include a message-specific attribute value describing client satisfaction level are kept in electronic memory. Some of the message components may be intended for dissatisfied clients, in which case the message component may include, for example: a discount coupon, a gift card, a coffee coupon, a message component that affects the content of the message, such as a happy voice or a funny picture.

In an embodiment of the invention client satisfaction level is evaluated, and if the client-specific attribute value of the client satisfaction level indicates that the client is less satisfied than a certain limit, a message component that improves the client's mood is selected. Thus, arguments softening the clients emotional state can be added to the client message, for example to calm an irritated client.

An embodiment of the invention comprises
- evaluating age of the client and, if on the basis of the age of the client it is determined that the client is a child below a given age, at least one of the following is performed:
   - selecting a message component with pictograms or pictographs instead of text;
   - selecting a message component with a soundtrack specifically intended for children;
   - selecting a message component that uses simple vocabulary;
   - sending a message to a client service agent, in order to direct staff there. Children are often a low-profile client group. Communication for children should often be different from that for adults. The invention makes it possible to take children into account in a new effective way. Said given age may be, for example, less than 18, less than 15, less than 12, less than 9, less than 7, less than 4 years.

An embodiment of the invention comprises
- evaluating at least one attribute, such as the client's emotional state, two or more times, before and after the presentation of the client message;
- based on the change in the client-specific value observed in these estimates, selecting a new client message and/or message component from the electronic memory to be presented to the client.
In this way, the effect of the client message on the client can be monitored and action can be taken in accordance with the detected change. For example, if a client's emotional state changes to less satisfaction, a mood-enhancing message can be produced for him or her.

An embodiment of the invention comprises
- evaluating the client's mood or client satisfaction level when entering a client interaction, such as a client service desk or a store, and when leaving it.
If the client's emotional state is saved, for example, at entering the store and it is compared to the emotional state when she/he leaves, the changes caused to the client's emotional state caused by the entire client encounter can be measured. This provides important measurable information about the success of client encounters and possible problem solutions in the client interface. Information about changes can be communicated even in real time to an individual such as a salesperson, a client service agent or a supervisor. Information about the changes can be stored in electronic memory and passed on to be used by the entire company or store chain. In this way, information about the changes can be used to improve client service.

An embodiment of the invention comprises
- evaluating whether a change in the client's mood or client satisfaction level was influenced by any client service agent or a specific client message, and if there was a negative impact;
- selecting a new message component correcting the situation and based on the message component, creating a new client message to the same client or client group;
- sending a message to the client service agent concerned or to some other person, the message informing about the change in the client's mood or client satisfaction level and about the new client message created and to be presented to the client based on that change.
This is useful, for example, in situations where personal service is judged to be the best option. This is the case, for example, if the client's emotional state deteriorates substantially as a result of client service or a client message. This allows for the client service agent to quickly present a corrective client message. For example, a client service agent who has caused a negative change, a store manager, or other supervisor can be automatically invited on site to present a new client message.

In an embodiment of the invention, the monitoring module identifies an object in which the client is interested. For example, the monitoring module can monitor at least one object and identify the object that the client is handling or examining. The monitoring module may comprise various monitoring devices, such as an acceleration sensor attached to the object, a switch activated by the movement of the object, pattern recognition means for detecting the direction of the movement, gaze or attention of the client, or the movement of the object. The direction of attention can mean, for example, the direction of the client's gaze, hand or movement. The object in which the client is interested may also mean an item in which the client is believed to be interested solely on the basis of one or more attributes evaluated on him. For example, a client of a certain age may be presented with certain things intended for his or her age without observing in more detail what object the client is handling or viewing. The object can be selected, for example, from products or services of an entire store or from products or services of an ongoing campaign.

In an embodiment of the invention the object in which the client is interested, i.e. the object which is handled or examined by the by the client, is identified with pattern recognition means detecting the direction of movement, gaze or attention of the client. For example, the pattern recognition means may detect the movement or orientation of the client's eyes or the movement and/or position of a body part, such as a finger or hand. The object can then be, for example, a product or device intended to be handled by the client, a message displayed on a display device or a user interface or a part thereof.

In an embodiment of the invention the object to be monitored is a product or device that is arranged to be handled, i.e. to be touched or to be moved by the client, whereby the method comprises:
- monitoring with the monitoring module at least one product or device in the vicinity of a client and identifying the product or device handled by the client on basis of its movement.
The invention is well suited for the presentation of various products or devices or for the presentation of other related messages, such as instructions for use. The invention is suitable, for example, for monitoring the operation of a pilot of a vehicle and for instructing him.

In an embodiment of the invention the monitoring module comprises or is connected to an acceleration sensor and/or pattern recognition means, whereby at least one of the following is performed in the method:
- monitoring orientation and/or movement of an object with an acceleration sensor attached to a product,
- monitoring orientation and/or movement of an object with pattern recognition means,

When it is noticed that the object is moving or its orientation is changing, one can usually be sure that the object in question is the one that the client is handling or examining. Thereby, in the invention follows:
- defining the object found to be moving based on the monitoring performed as the object that is handled or examined by the client.
An accelerometer attached to an object or a pattern recognition means arranged to monitor the object are known and reliable ways to detect movement of objects.

In an embodiment of the invention, the monitoring module monitors an object in the vicinity of the client or at a certain distance from the client. For example, the object may be detectable from the same electronic image produced by the imaging device as the client. The pattern recognition device can be set to interpret the client's distance from the object. The monitoring module may comprise a motion detector or other switch arranged to detect when the client is near the object being monitored or at a certain location or at a certain distance from the object being monitored.

In an embodiment, the object to be monitored is software-generated user interface presented to the client on a display device. In an embodiment, the object to be monitored is one or more points in the user interface that the client is intended to touch or point to. In an embodiment, the display device comprises means for detecting client's movement or points of attention and these means are used as the monitoring module or as a part of the monitoring module. For example, a touch screen may comprise suitable means for identifying the point to which the client touches or points.

In one embodiment of the invention, the object to be monitored is a client terminal device, such as a client service terminal, a ticket machine or a queuing number machine, client's own mobile terminal or other display device, and the client message to be presented is a user interface of a client terminal device or part thereof or a message component related to the user interface. For example, the user manual of the client terminal device or the entire user interface can be adapted to the demographics of the client. For example, a user manual for a child can be presented as pictograms or pictograms instead of text.

In an embodiment, the object of client's interest to be monitored is a client message created and presented to the client in accordance with the invention. In this case, the object of interest is modified according to the client's attributes. An example of this is a user interface or a part of the user interface presented on a display device and modifiable according to the user's attributes.

At a client terminal device, e.g. at a queuing number machine, one or more of the following can be performed on basis of at least one client-specific attribute value:
- selecting a suitable client service agent or client service queue for the client. For example, the client can be referred to a client service agent of the same sex and/or age as the client. An angry or aggressive client can be directed, for example, directly to a supervisor. The client can get into a faster bypass queue or VIP queue based on their gender, age or other attributes.
- notifying a client service agent about information evaluated about the client, such as age, gender, mood, emotional state, perhaps already before a client contact. This way the client service agent may prepare better for the client.
- forwarding the client in a queue or let him pass the whole queue. For example, a child or elderly or a bad-tempered client may receive faster service than others.

An embodiment of the invention comprises
- recording interaction data of each object into an electronic memory, i.e., for example, information on the amount of handling of a product or device, the handling time, or the orientation in which the product or device has been held and for how long;
- receiving a request to obtain a summary or statistics of the interaction data of a specific object;
- generating a summary or statistic of the interaction data of the subject;
- generating a message comprising the requested summary or statistic;
- sending the message to the sender of the request and/or presenting the message or the summary or statistics it contains on a display device.
This makes it easy to obtain a wealth of measurable and useful data. A computer system according to the invention can easily form a message or a view at the user interface with which relevant summaries or statistics of the interaction data can be presented. Interaction data can be used, for example, in the design of store presentations, to compare the interest between different products, to decide what kind of products are purchased for the store. It can be used to find out the side of the product or its packaging that is most interesting to the client, which can thus be placed in front of the client in the presentation. For example, it is possible to find out in which direction the product should be placed in its transparent packaging so that the most interesting side is in the presentation towards the client.

In an embodiment of the invention a client specific client interaction record is created, into which are attached or saved e.g. the following:
- evaluated client specific attribute values,
- objects handled or examined by the client, and
- client service agents encountered by the client.
The times of events and times of savings of data in the client interaction record can also be attached to client interaction record. The client interaction record is stored in an electronic memory. It can be used e.g. to evaluate changes in the recorded attribute values. This enables an effective evaluation of changes e.g. in the satisfaction level of the client as a result of client interaction. In an embodiment of the invention
- selecting from the electronic memory, on basis of the changes in the client specific attribute values, a new message component in order to create a new client message to the client;
- creating the new client message and presenting it to the client.
The client interaction record is a way to produce even more effective client messages.

In one embodiment of the invention, the effect of new client messages displayed to the client on the client's attributes is monitored and the effect is compared to the assumed effect of the messages. If it is found that a particular type of message does not have the expected effect, the type of message presented to the client is changed. For example, when a client is angry, they may be shown a slightly humorous message. Its expected effect is an increase in client satisfaction. If it is found that the message did not improve the client's mood, the message type can be changed. Next, a gift-type message, such as printing a paper coffee ticket or sending an electronic coffee ticket to the client, can be presented to the client. On the other hand, if the message is found to have an assumed effect, it can be assessed whether a sufficient level of client attribute has been reached. If not, more messages of the same well-functioning type can be sent to the client. On the other hand, if a sufficient level is reached, the message type can be changed to neutral, for example.

In one embodiment of the invention, the attribute describing the client is evaluated by means of a trained neural network. For example, a neural network application known per se can be used to determine the client's state of mind or demographic information, such as the client's age or gender or the language used by the client, based on the client's speech and/or voice. One or more message components suitable for the client can then be selected based on this.

In one embodiment of the invention, the client's state of mind is assessed using a trained neural network based on the client's speech and/or voice. Parameters used in the evaluation can include, for example, sound volume, sound joy, sound enthusiasm such as exclamations, swearing, or converting the client's speech to text and real-time analysis of the text. Changes in parameters can be used to assess a change in state of mind. Based on the changes, for example, message components can be presented to the client that strengthen the desired state of mind.

### BRIEF DESCRIPTION OF THE FIGURES

The invention is described in more detail below with reference to the enclosed schematic drawing, in which
- Figure 1: shows an apparatus of the invention and a client;
- Figure 2: shows a second apparatus of the invention and a client;
- Figure 3: shows a third apparatus of the invention and a client;
- Figure 4: shows the apparatus and client of Figure 3 in another situation;
- Figure 5: shows a client service terminal of the invention and a client;
- Figure 6: shows a second client service terminal of the invention and a client;
- Figure 7: shows a terminal device of the invention;
- Figure 8: shows a method of the invention as a flow chart; and
- Figure 9: shows a second method of the invention as a flow chart.

### DETAILED DESCRIPTION OF THE EXAMPLES OF THE FIGURES

For the sake of clarity, same reference numerals are used in different figures and embodiments for some of the corresponding parts.

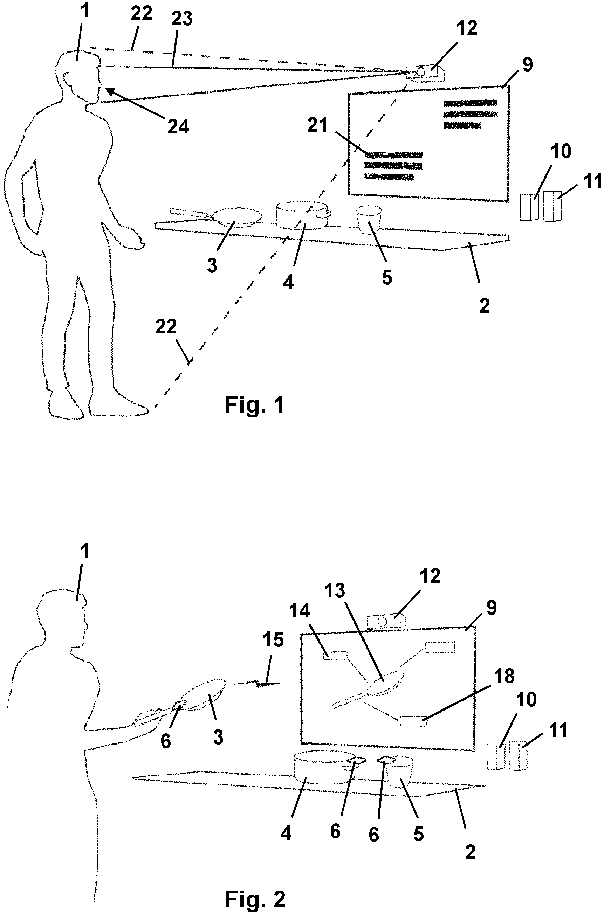

Figure 1 shows a client 1 exploring kitchenware 3, 4, 5 on a table 2 of a store. A display device 9 is situated behind the table. A camera 12 is attached on the display device 9. The picture from the camera is moved with communication means (not shown) to a central computer 11. A software runnable in the memory of the computer 11, or otherwise usable by the computer, manages information shown on the display device 9.

In the memory of the computer 11 or otherwise usable to it are software for image analysis, e.g. for pattern recognition, which can be used to track the client and products, to identify client expressions, and to evaluate client attributes that can be identified from the image. A database or the like is available in the memory of the central computer 11 or otherwise usable by it, for storing information about the products 3, 4, 5 to be presented, for example digital models 13 of the products or other product information 14, 18 (shown in Fig. 2). Other product information can be, for example, technical features, instructions and price information of the products. The electronic memory also stores message components from which client messages suitable for each situation can be compiled.

With each message component, there are kept both message-specific attribute values relating to the attributes describing the client 1 and message-specific object values relating to the objects related to the message. The attribute value relating to the attribute describing client 1 can be, for example, information about the age of the client or the sex of the client to whom the message component in question is intended. On the other hand, the message-specific object value relating to the object related to the message tells about which object, in this case for which piece of kitchenware 3, 4 or 5 the message component in question is intended. The same message component can be intended for several different client groups and objects, i.e. a message component can have several attribute values and several object values.

The apparatus comprises a monitoring module, by means of which it is detected which of the products 3, 4, or 5 on the table the client 1 is interested in, i.e. for example which product the client views, touches or handles. The monitoring module comprises monitoring devices as well as software for processing the information produced by the monitoring devices. The software may be executable in the memory of the computer 11 or, for example, over computer networks elsewhere. The software may comprise pattern recognition means for interpreting the image taken by the camera 12. In this case, it can be interpreted from the image, for example, which of the products 3, 4 or 5 the client looks at or touches or which of them is in the client's hand. The monitoring device may comprise an acceleration sensor 6 attached to the object, a switch activated e.g. by movement of the object and attached e.g. on the surface of the table 2, or pattern recognition means for detecting the direction of the client's gaze or the movement of the object.

The apparatus also comprises a software implemented message selection module comprising in the memory of the computer 11 or otherwise usable by it a software which compiles the client message to be presented using one or more message components. The message selection module selects the message component to be presented from among the message components whose object value corresponds to the object of interest to the client. That is, if the client handles the frying pan 3, one or more message components related to the frying pan are selected. The message selection module also selects the message component so that the value of the attribute evaluated from the client 1 corresponds as closely as possible to the message-specific attribute value of the same attribute of the message to be selected. For example, if the client is a child, she can be shown client message about the frying pan which is meant for a child.

The dashed lines 22 show the pattern recognition of the entire client 1 measured from the camera image. From it, for example, the client's height and other physique can be deduced, and observations can be made about his or her clothing, movements, hurry, and state of mind. The unbroken line 23 shows in particular the recognition of faces and facial expressions from the client's face 24. For example, conclusions can be drawn about the client's state of mind and satisfaction, the client's age, gender.

In the situation of Figure 1, the client does not handle any product, so the display device 9 displays general information 21, for example general information about the store or the products presented on the table 2. When the system detects which product the client is interested in, a relevant client message is displayed on the display device 9. The selection and presentation of the client message in the example of Figure 2 also fit the situation of Figure 1.

In the situation of Figure 2, the monitoring of the product to be handled is carried out by means of orientation sensors 6 attached, for example with stickers to the pieces of kitchenware 3, 4, 5 to be presented. For example, the orientation sensor may comprise a plastic casing and the functional parts of the orientation sensor, i.e. the motion sensor, (not shown) placed in operative connection with each other. The functional parts of the orientation sensor can be, for example, at least a 1-axis or at least 3-axis acceleration sensor, a battery, a radio transmitter (e.g. BLE radio transmitter, Bluetooth Low Energy) and a microcontroller controlling the operation of the orientation sensor. Many different wireless transmission technologies can be used in the invention for data transmission, such as BLE, Bluetooth, ZigBee, LoRa. When the client 1 grabs the frying pan 3, the acceleration sensor of the orientation sensor 6 generates an orientation information signal 15 which is wirelessly transmitted by the orientation sensor radio transmitter to the receiver 10. From there, the orientation information is further directed to the central computer 11 of the system. The central computer 11 has software which, after receiving the orientation information from the orientation sensor 6, identifies an identifier in the orientation sensor signal 15 indicating which product the client 1 is moving. In the example in the figure it is determined that the frying pan 3 is the object of interest to the client.

In the examples of Figures 1 and 2, the client message is defined to comprise a digital model 13 of the product of interest to be presented on the display device 9 and product-related product information 14 and 18. The message selection module of the software in the memory of the computer 11 selects the message components for the client message, the object value of which corresponds to the frying pan. In this case, the software activates the digital model 13 of the frying pan 3 as one message component, and the product information 14, 18 describing the properties of the frying pan as the other message components. Thus, when the client 1 grips the frying pan 3, the digital model 13 and the product information 14 and 18 of the frying pan are displayed as a client message via the media player on the display device 9.

The attribute measured from the client affects the client message being presented. The product information 14, 18 shown in the examples of Figures 1 and 2 is selected according to the age of the client. For adults, for example, product information is written technical information about frying pan materials and pan care instructions. On the other hand, if the client is judged to be under 10 years of age, for example, video clips of the use of the pan can be presented as product information.

According to the invention, for example in the situations of Figures 1 and 2, in addition to the concrete products 3, 4 and 5 to be handled, the objects of interest to the client can also be determined to be things presented on the display 9, such as the digital model 13 or the product information 14 and 18. This conclusion can be made, for example, by means of pattern recognition means which detect the direction of the client's gaze.

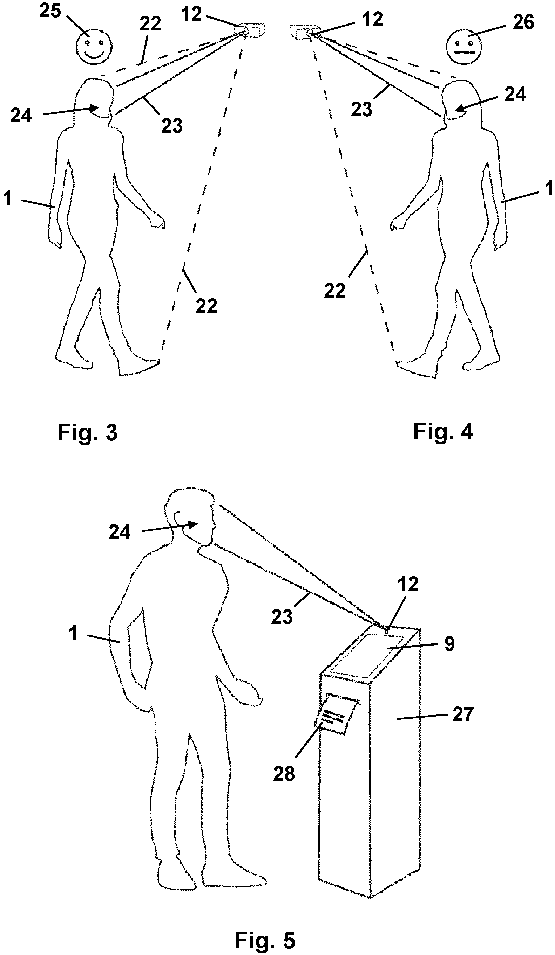

Figures 3 and 4 show a camera 12 which monitors the client 1 and his face 24 as shown in Figure 1. The hardware, for example the computer 11, can also otherwise be as in the example of Figure 1. For example, the pattern recognition means comprises software for interpreting the image taken by the camera 12. In Figure 3, the client arrives at a store, and the apparatus according to the invention evaluates his level of satisfaction as shown by the emoticon 25 to be very good, i.e. the client is happy. Figure 4 shows the situation after the situation of Figure 3. Now the satisfaction level of the client 1 is assessed as very bad as shown by the emoticon 26, so the client 1 is dissatisfied. If the client is known to have been in a client service situation in the meantime, for example, he or she is known to have visited the service desk, the system can assess this client service situation as the client's object of interest and thus the cause of a bad mood. If a specific client service situation or other object is not known, the client's object of interest can be defined as the store in general or any client encounter location or space where the client is, such as vehicle, taxi, bus, public agency. For example, the system can now provide information about the client's situation to staff, who can present a client message to the client that is hoped to improve his or her level of satisfaction.

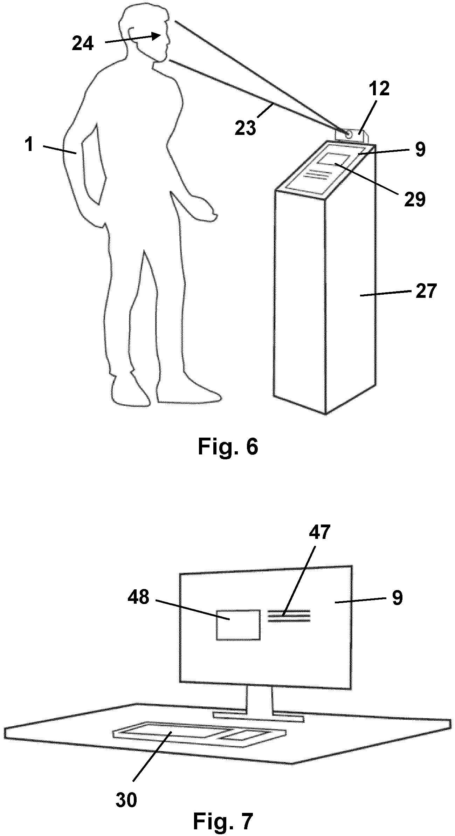

In the situations of Figures 5 and 6, the client 1 is dealing with a client terminal device 27. The device 27 has a camera 12 which monitors at least the face 24 of the client 1, according to the example of Figure 1. The device 27 has a touch screen 9 showing the user interface 29 (Fig. 6), for example selection buttons and other possible client messages.

At least one attribute is evaluated from the image taken by the camera 12 of the client of Figure 5 or 6. A value is assigned to the attribute, i.e. a client-specific attribute value. Client 1's object of interest is determined from what he is doing. For example, the object of interest may be an image or video presenting on the display device 9 of the device 27 or a point of the user interface 29 which is touched by the user 1. For example, the client may touch a button on the user interface 29, which indicates the client's desire to get a queuing number for the client service desk. Based on the value of the attribute measured from the client and the object of interest selected by him on the touch screen 9, the system selects the message components suitable for the situation and presents the client with one or more client messages composed of them. Client messages may be, for example, a paper 28 printed by the device's printer, a confirmation of a successful selection of a queuing number on the display device 9, and an audible signal from the device's speaker (not shown). Even if the client is not told, he or she can be referred to a client service agent who is considered to be suitable for him or her. For example, a client can be referred to a client service agent of the same sex or age as the client. An angry or aggressive client directly to meet the supervisor. The system can inform the client service agent of the information evaluated of the client, such as his or her age or emotional state even before the client encounters. This allows the client service agent to better prepare for the client.

The user interface 29 of a client terminal device, such as the queuing number device of Fig. 5 or 6, can be modified according to the client and his or her object of interest. If client 1 in an image taken by the camera 12 is evaluated to be an adult, the buttons of the user interface can be presented as text-based. If the client is evaluated to be a child, the buttons on the user interface can be presented as pictograms or clear images can be attached to the text. The apparatus identifies the object of interest of the client 1 and selects the message components from those intended for this object. For example, when a user touches a part of the touch screen 9, the system receives information about the touch point. The part of the user interface 29 to be presented at the touch point is then determined to be an object of interest to the client. For example, if the user touches the user manual icon of the device, the client will be shown a client message with the user manual selected according to attributes evaluated of him or her.

Figure 7 shows a computer display device 9 and a keyboard 30 of a computer in, for example, an office space. The system according to the invention has stored in its electronic memory interaction data of each object to be monitored, i.e. for example, information of the product or device being handled, on the amount of handling, the time of handling, or the orientation in which the product or device has been held and for how long. The devices of Figure 7 communicate with the system according to the invention so that a request can be sent from an input device, such as a keyboard 30, to display a summary and/or statistics of the interaction data of a particular monitored object. When the system receives the above-mentioned request, it generates the requested summary and/or statistics and sends it to the requester's computer. Summary 47 or statistics 48 may be displayed on the display device 9.

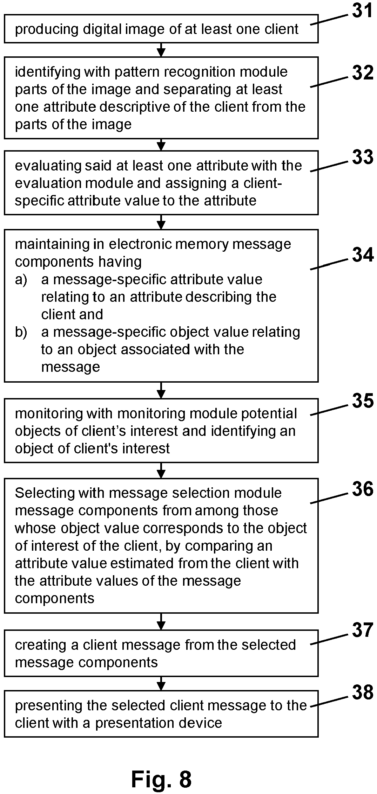

Figure 8 shows a method or a part thereof according to the invention as a flow chart. In step 31, a digital image of at least one client is produced. In step 32, a pattern recognition module identifies parts of the image and separates at least one attribute descriptive of the client from the parts of the image. In step 33, the evaluation module evaluates said at least one attribute and assigns a client-specific attribute value to the attribute. In step 34, message components having a message-specific attribute value relating to an attribute describing the client and a message-specific object value relating to an object associated with the message are maintained in the electronic memory. In step 35, potential objects of client's interest are monitored with a monitoring module and an object of client's interest is identified. In step 36, the message selection module selects message components from among those whose object value corresponds to the object of interest of the client by comparing the attribute value estimated from the client with the attribute values of the message components. In step 37, a client message is created from the selected message components. In step 38, the selected client message is presented to the client by the presentation device.

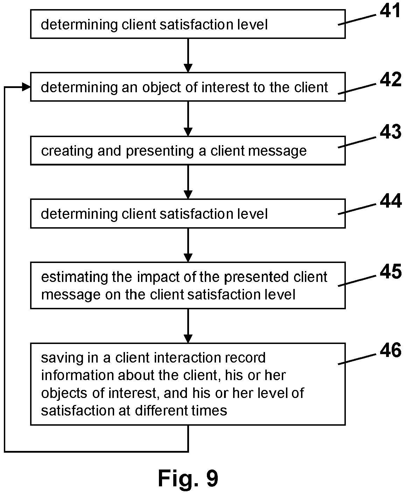

Figure 9 shows a method or part thereof according to the invention as a flow chart, showing in principle how a client message can be modified on the basis of a change in an attribute estimated from a client. In step 41, the client satisfaction level in the initial situation is determined. This can be done, for example, according to steps 31 to 33 in Figure 8. In step 42, an object of interest to the client is determined, for example, according to step 35. In step 43, a client message is created and presented according to, for example, steps 36-38. In step 44, the client satisfaction level is re-determined according to steps 31-33. In step 45, the impact of the presented client message on the client satisfaction level is estimated. That is, in step 45 several satisfaction level measurements are compared, for example, the last two satisfaction level measurements. In step 46, information about the client, his or her objects of interest, and his or her level of satisfaction at different times are saved in a client interaction record. Next, we return to step 42 and determine which object the client is now interested in, it may be the same or a different object as the last time. Now, in step 43, a client message is created once again, but taking into account the change in client satisfaction level observed in step 45. For example, if a client has become more dissatisfied, a message component is selected in the client message that is intended to make him or her more satisfied.

It is not intended to limit the invention to the examples described above, but the scope of the invention is determined by the independent claims presented below. The dependent claims present some advantageous embodiments of the invention.

## Claims

1. Method of creating and presenting a client message (13, 14, 18, 28, 29), which method comprises at least the following steps, carried out by means of at least one computer (11), thereto connected devices (6, 9, 10, 12, 27) and computer-run software:
- examining and evaluating at least one client attribute (25, 26);
- keeping message components with a message-specific attribute value according to a client attribute, in an electronic memory;
- identifying an object (3, 4, 5, 9, 13, 14, 18, 27, 29), i.e. an object in which the client is interested, with a monitoring module;
- selecting a message component which, in each situation, constitutes the most appropriate client message, based on the client attributes or their objects of interest, with a message selection module;
- presenting the message component to the client;
**characterised in**
- keeping in the electronic memory message components that are valued according to
∘ with which object (3, 4, 5, 9, 13, 14, 18, 27, 29) they can be used, i.e. message components comprise at least one message-specific object value according to the object (3, 4, 5, 9, 13, 14, 18, 27, 29) related to the message; and
∘ what kind of clients they are suitable for, i.e. message components comprise at least one message-specific attribute value,
- comparing with the message selection module the message-specific object values and client specific attribute values of the message components whose object value corresponds to the object in which the client is interested;
- selecting with the message selection module, based on the mentioned comparison between client attributes and their objects of interest, the one or more message components which, in each situation, constitute the most appropriate client message;
- creating a client message (13, 14, 18, 28, 29) using the selected one or more message components and presenting it to the client with a presentation device (9).

2. Method according to claim 1, **characterised in**:
- producing a digital image of at least one client (1) with an imaging device (12);
- identifying parts of the image with a pattern recognition module and recognizing at least one client attribute (25, 26) from the parts of the image;
- evaluating the at least one attribute mentioned with an evaluation module and giving it a client specific attribute value;
- selecting with the message selection module a message component, by comparing its message-specific attribute value and client-specific attribute value given to the same attribute.

3. Method according to claim 2, **characterised in**:
- recognizing the at least one client attribute (25, 26) from the face of the client in the image, whereby the at least one attribute is selected from the list: age, gender, emotional state, satisfaction level (25, 26).

4. Method according to any previous claim, **characterised in that** at least one message component kept in the electronic memory comprises a component that affects the content of the client message formally or effectively, such as sound volume, language used, difficulty level of the vocabulary used, audio track used in the message, tone of voice or gender of the person speaking in the message, displaying of subtitles on a display device (9).

5. Method according to any previous claim, **characterised in**:
- keeping in electronic memory message components that include a message-specific attribute value describing client satisfaction level (25, 26); and
- evaluating client satisfaction level, and if the client-specific attribute value of the client satisfaction level indicates that the client is not satisfied, selecting a message component that improves the client's mood, such as a discount coupon, a gift card or a message component that has a formal or effective effect on the content, such as a happy voice or a fun image.

6. Method according to any previous claim, **characterised in**:
- evaluating age of the client (1) and, if on the basis of the age of the client it is determined that the client is a child below a given age, at least one of the following is performed:
- selecting a message component with pictograms or pictographs instead of text;
- selecting a message component with a soundtrack specifically intended for children;
- selecting a message component that uses simple vocabulary;
- sending a message to a client service agent, in order to direct staff there.

7. Method according to any previous claim, **characterised in**:
- evaluating at least one attribute two or more times, such as client satisfaction level, before and after presenting the client message (13, 14, 18, 28, 29);
- selecting from the electronic memory, on basis of a change in the client specific attribute value (25, 26) identified in these evaluations, a new message component and/or a new client message to be presented to the client (1).

8. Method according to any previous claim, **characterised in**:
- evaluating the client's mood or client satisfaction level (25, 26) when entering a client interaction, such as a client service desk or a shop, and when leaving it.

9. Method according to any previous claim, **characterised in**:
- evaluating whether a change in the client's mood or client satisfaction level (25, 26) was influenced by any client service agent or a specific client message, and if there was a negative impact;
- selecting a new message component correcting the situation and based on the message component, creating a new client message to the same client or client group;
- sending a message to the client service agent concerned or to some other person, the message informing about the change in the client's mood or client satisfaction level and about the new client message created and to be presented to the client based on that change.

10. Method according to any previous claim, **characterised in that** the object to be monitored is a product (3, 4, 5) or device that is arranged to be handled, i.e. to be touched or to be moved by the client, whereby the method comprises:
- monitoring with the monitoring module (12) at least one product (3, 4, 5) or device in the vicinity of the client and identifying the product or device handled by the client on basis of its movement.

11. Method according to claim 10, **characterised in**
- monitoring orientation and/or movement of the object (3, 4, 5) with an acceleration sensor (6) attached to the product,
whereby the object (3) which is handled or examined by the client is identified on the basis of a change in the orientation and/or movement of the object.

12. Method according to claim 10 or 11, **characterised in**
- monitoring orientation and/or movement of the object (3, 4, 5) with pattern recognition means (12),
whereby the object (3) which is handled or examined by the by the client is identified on the basis of a change in the orientation and/or movement of the object.

13. Method according to any previous claim, **characterised in**
- identifying the object in which the client is interested, i.e. the object which is handled or examined by the by the client, with pattern recognition means detecting the direction of movement, gaze or attention of the client.

14. Method according to any previous claim, **characterised in** performing one or more of the following on basis of at least one client specific attribute value:
- selecting a suitable client service agent for the client (1);
- notifying a client service agent about information evaluated about the client, such as age, gender, mood, satisfaction level (25, 26);
- forwarding the client in a queue;
- changing the client into a different queue, such as a faster bypass queue, a VIP queue, service queue selected according to gender or age.

15. Method according to any previous claim, **characterised in**
- creating a client specific client interaction record, into which are attached:
∘ client specific attribute values of the evaluated client attributes (25, 26);
∘ items (3, 4, 5, 9, 13, 14, 18, 27, 29) handled or examined by the client, if any;
∘ client service agents encountered by the client, if any;
- recording the client interaction record in an electronic memory;
- evaluating with an evaluation module changes in the client specific attribute values (25, 26) recorded in the client interaction record, i.e. evaluating changes in the client attributes as a result of client interaction;
- selecting from the electronic memory, on basis of the changes in the client specific attribute values, a new message component in order to create a new client message to the client;
- creating the new client message and presenting it to the client (1).

16. Apparatus for creating and presenting a client message (13, 14, 18, 28, 29), the apparatus comprising at least one computer (11) comprising an electronic memory and program code elements arranged runnable on it, and comprising functionally connected to the computer
- the examining equipment (12) and evaluation module in order to examine and evaluate at least one attribute of a client (1);
- an electronic memory and maintained in it message components, which comprise at least one message-specific attribute value according to a client attribute;
- a monitoring module, arranged to identify an object (3, 4, 5, 9, 13, 14, 18, 27, 29), i.e. a thing in which the client is interested;
- a message selection module, arranged to select a client message to a client based on the client's at least one attribute and object of interest;
- presenting device (9, 27) arranged to present a selected client message to the client;
**characterised in that** the apparatus comprises:
- message components in the electronic memory, which message components comprise:
∘ at least one message-specific attribute value, which indicates to which kind of clients they are suitable; and
∘ at least one message-specific object value, which indicates with which object (3, 4, 5, 9, 13, 14, 18, 27, 29) the message component can be used;
- a message selection module, arranged to:
∘ compare the message-specific attribute values and client specific attribute values of those message components that have object values corresponding to the object in which the client is interested;
∘ select, based on the mentioned comparison, one or more message components which, in each situation, constitute the most appropriate client message;
∘ create a client message (13, 14, 18, 28, 29) to be presented, by using the selected one or more message components.
